Europäisches Patentamt

European Patent Office

Office européen des brevets

(19)

(11) Veröffentlichungsnummer: **0 077 906**
A2

(12) **EUROPÄISCHE PATENTANMELDUNG**

(21) Anmeldenummer: **82108278.1**

(22) Anmeldetag: **08.09.82**

(51) Int. Cl.³: **B 25 J 9/00**
**B 25 J 19/00**

(30) Priorität: **09.09.81 DE 3135608**

(43) Veröffentlichungstag der Anmeldung:
**04.05.83 Patentblatt 83/18**

(84) Benannte Vertragsstaaten:
**AT BE CH DE FR GB IT LI LU NL SE**

(71) Anmelder: **Reis, Walter**
**Frankenstrasse 1**
**D-8753 Obernburg(DE)**

(72) Erfinder: **Reis, Walter**
**Frankenstrasse 1**
**D-8753 Obernburg(DE)**

(72) Erfinder: **Langner, Karlheinz**
**An der Senne 42**
**D-8752 Mainaschaff(DE)**

(72) Erfinder: **Pfenning, Udo**
**Bayernstrasse 17**
**D-8753 Obernburg(DE)**

(74) Vertreter: **Gudel, Diether, Dr. et al,**
**Patentanwälte Dr. V. Schmied-Kowarzik Dipl.-Ing. G.**
**Dannenberg Dr. P. Weinhold Dr. D. Gudel Dipl.-Ing. S.**
**Schubert Dr. P. Barz Grosse Eschenheimer Strasse 39**
**D-6000 Frankfurt am Main 1(DE)**

(54) Programmgesteuerter Manipulator.

(57) Beschrieben wird ein programmgesteuerter, mehrachsiger Manipulator mit Gewichtsausgleich der Achsen (2, 4, 6), der nahezu schwerelos programmiert werden kann. Eine doppelte Sicherheitsschaltung ist vorgesehen, die sicherstellt, daß beim Programmieren des Manipulators von Hand die Antriebe (16) der Arme (2, 4, 6) nicht eingeschaltet werden können. Die Sicherheitsschaltung trennt die Antriebe (16) von ihrer Energiezufuhr ab und löst gleichzeitig mechanisch die Antriebe (16) über eigene Kupplungen (19) von ihren Armen (2, 4, 6).

Fig. 2

EP 0 077 906 A2

- 1 -

Beschreibung

Die Erfindung betrifft einen programmgesteuerten, mehrachsigen Manipulator mit mehreren, unabhängig voneinander verschwenkbaren Armen mit eigenen Antrieben, wobei wenigstens einer der Arme um eine horizontale Achse schwenkbar ist und die Antriebe zwecks Erleichterung der Führung der Arme beim Programmieren des Manipulators ausschaltbar sind, ferner mit Gewichtsausgleich aller um horizontale Achsen schwenkbaren Arme.

Einen solchen Manipulator beschreibt die DE-OS 2 848 385 und, in einer ähnlichen Ausführungsform, die schwedische Offenlegungsschrift 379 665.

Die Antriebe werden dort durch hydraulische Kolben-Zylinder-Einheiten gebildet. Um die Reibung beim Programmieren dieses Manipulators herabzusetzen, sind die Hydraulikzylinder dort mit jeweils einem Bypassventil versehen, das die hydraulische Verbindung zu den Zylindern während des Programmiervorgangs kurzschließt. Durch diese Maßnahmen werden aber nicht alle beim Programmieren auftretenden Reibungskräfte ausgeschaltet; vielmehr muß zum Programmieren noch ein fühlbarer Widerstand überwunden werden, der insbesondere darauf beruht, daß beim Verschwenken der Arme die Kolben der Antriebszylinder eine Relativbewegung zur Wand ihrer Zylinder ausführen, wobei merkliche Reibungskräfte zu überwinden sind. Diese multiplizieren sich mit der Anzahl der zu verschwenkenden Arme. Auch muß die Hydraulikflüssigkeit über die Bypassventile mit engeren Querschnitten hierbei verdrängt werden. Ein weiterer Nachteil besteht darin, daß keine Vorsorge dafür getroffen ist, um sicherzustellen, daß beim Programmieren dieses

- 2 -

Manipulators von Hand die Antriebe nicht unbeabsichtigt eingeschaltet werden, beispielsweise durch einen Kurzschluß im Hauptschalter oder dergleichen, so daß dann die den Programmiervorgang durchführende Person Schaden nehmen könnte.

Die DE-AS 1 481 819 beschreibt einen ferngesteuerten, nicht-programmierbaren Manipulator mit mehreren Armen mit eigenen Antrieben, denen Getriebe nachgeschaltet sind. Zu Reparaturzwecken kann ein bestimmtes Zahnrad dieser Getriebe jeweils ausgerückt werden, so daß dann alle Arme dieses Manipulators durch eine Öffnung in der Wand eine den Manipulator strahlungssicher umgebenden Zelle zu Reparaturzwecken herausgezogen werden können. Eine Sicherheitsschaltung für eine den Manipulator bedienende Person ist dort nicht vorgesehen und ist auch nicht notwendig, weil dieser Manipulator in einer strahlungssicheren Zelle arbeitet und nicht von Hand programmiert werden soll.

Die DE-OS 2 833 638 beschreibt eine Vorrichtung zum Programmieren der Bahnkurve eines Manipulators mit Hilfe eines Lehrgerüstes. Dies ist aber konstruktiv und in der Handhabung sehr aufwendig.

Die DE-AS 2 852 821 beschreibt einen programmierbaren, mehrachsigen Manipulator mit Entsperrung der Antriebselemente der Arme. Auch hier ist keine Sicherheitsschaltung vorgesehen und auch kein Gewichtsausgleich, weil alle Schwenkachsen dieses Manipulators lotrecht verlaufen.

Der Erfindung liegt ausgehend von einem programmgesteuerten Manipulator der eingangs genannten Art die Aufgabe zugrunde, diesen so weiterzubilden, daß eine Bedienungsperson ihn von Hand leicht und sicher programmieren kann.

- 3 -

Zur Lösung dieser Aufgabe ist die Erfindung dadurch gekennzeichnet, daß im Kraftfluß zwischen jedem Antrieb und dem ihm zugeordneten Arm jeweils eine Kupplung vorgesehen ist, die bei ihrer Betätigung über einen eigenen Kupplungsantrieb den Arm von seinem Antrieb ganz trennt, daß ein Wegemeßsystem an jedem Arm im Kraftfluß hinter der diesem Arm zugeordneten Kupplung befestigt ist, und daß eine Sicherheitsschaltung vorgesehen ist, die im Bereich des Manipulators einen Sicherheitskontakt hat, der alle Antriebe von ihrer Energieversorgung trennt, wenn eine Bedienungsperson zum Programmieren in den Schwenkbereich der Arme des Manipulators tritt, und die einen Taster hat, bei dessen Betätigung alle Kupplungen gemeinsam getrennt werden.

Weil die Kupplungen die Antriebe von ihren Armen ganz abtrennen, müssen bei Betätigung der Kupplungen zum Programmieren die Antriebe und den Antrieben gegebenenfalls nachgeschaltete Getriebe überhaupt nicht mehr mitbewegt werden. Die zum Programmieren von Hand zu überwindenden Reibungskräfte sind daher minimal und ermöglichen ein spielend leichtes Führen. Auch bei getrennten Kupplungen mißt das zum Programmieren notwendige Wegemeßsystem den vom betreffenden Arm jeweils zurückgelegten Weg genau, weil es auch bei einer Trennung der Kupplung alle Bewegungen seines Armes mitmacht. Die Sicherheitsschaltung gibt für die das Programmieren des Manipulators durchführende Person eine doppelte Sicherheit, indem nämlich zum einen alle Antriebe von ihrer Energieversorgung abgetrennt werden und zum anderen zusätzlich alle Kupplungen geöffnet werden. Sollte eine dieser beiden mechanisch bzw. elektrischen Sicherheitskreise ausfallen, so gibt der andere Sicherheitkreis der Bedienungsperson einen ausreichenden Schutz. Fallen beispielsweise die Kupplungen unbeabsichtigt ein, so

- 4 -

können die Arme dennoch nicht motorisch angetrieben werden, weil ihre gemeinsame Energieversorgung ausgeschaltet ist. Wird andererseits diese gemeinsame Energieversorgung unbeabsichtigt eingeschaltet, so können die Arme dennoch nicht angetrieben werden, weil sie mechanisch über die getrennten Kupplungen von ihren Antrieben abgetrennt sind. Außerdem erleichtert die gemeinsame Betätigung aller Kupplungen über den Taster den Programmiervorgang, weil hierzu nicht mehrere Kupplungen von Hand gelöst werden müssen, wie dies bei dem nicht programmierbaren Manipulator nach der eingangs diskutierten DE-AS 1 481 819 der Fall wäre.

Der Sicherheitsschalter kann beispielsweise an einer Tür eines den Arbeitsbereich des Manipulators umgebenden Absperrgitters angebracht sein, und der Taster an einem Handgriff, mit dem der letzte der Arme des Manipulators geführt wird.

Die Sicherheit wird weiterhin erhöht, wenn der Taster bei seiner Betätigung einen weiteren Sicherheitskontakt in der Energieversorgung aller Antriebe öffnet.

Bevorzugt wird es, wenn die Kupplungen als Reibungskupplungen ausgebildet sind. Man kann dann den Programmiervorgang an einer beliebigen Stelle unterbrechen und die Kupplungen fallen in diesen Winkelstellungen ein und stellen die kraftschlüssige Verbindung zwischen Antrieb und Arm wieder her.

Am Ende des letzten der Arme des Manipulators ist ein bestimmtes Arbeitsgerät vorgesehen, beispielsweise eine Spritzpistole zum Auftragen von Farben, eine Greifzange oder ein anderes Arbeitsgerät. Diese Arbeitsgeräte haben in der Regel unterschiedliche Gewichte. Um diese unter-

- 5 -

schiedlichen Gewichte auszugleichen,wird es bevorzugt, wenn für den Gewichtsausgleich vorgesehene Gegengewichte oder Federelemente an derjenigen Achse einstellbar sind, die das Arbeitsgerät trägt. Die Federelemente sind vorzugsweise pneumatisch. Sie können aber auch hydraulisch oder mechanisch sein. Falls Gegengewichte für den Gewichtsausgleich verwendet werden, kann dies in Gestalt von Gewichtsscheiben vorgesehen sein, die auswechselbar auf eine Achse aufgesteckt werden können, wodurch der gewünschte Gewichtsausgleich leicht erzielt werden kann.

Bei vielen Anwendungsfällen ist hinter dem Antrieb ein Getriebe vorgesehen, insbesondere wenn die Antriebe Elektromotoren sind, wie dies bevorzugt wird. Diesbezüglich wird es bevorzugt, wenn die Kupplung hinter dem Getriebe angeordnet ist, um bei einem Lösen der Kupplung auch das Getriebe nicht mitführen zu müssen.

Die Erfindung wird im folgenden anhand eines Ausführungsbeispiels näher erläutert, aus dem sich weitere wichtige Merkmale ergeben. Es zeigt:

Fig. 1    in einer Seitenansicht einen Manipulator nach der Erfindung;

Fig. 2    das Gelenk zwischen zwei Armen des Manipulators nach Fig. 1;

Fig. 3    schematisch eine hierbei eingesetzte Sicherheitsschaltung.

- 6 -

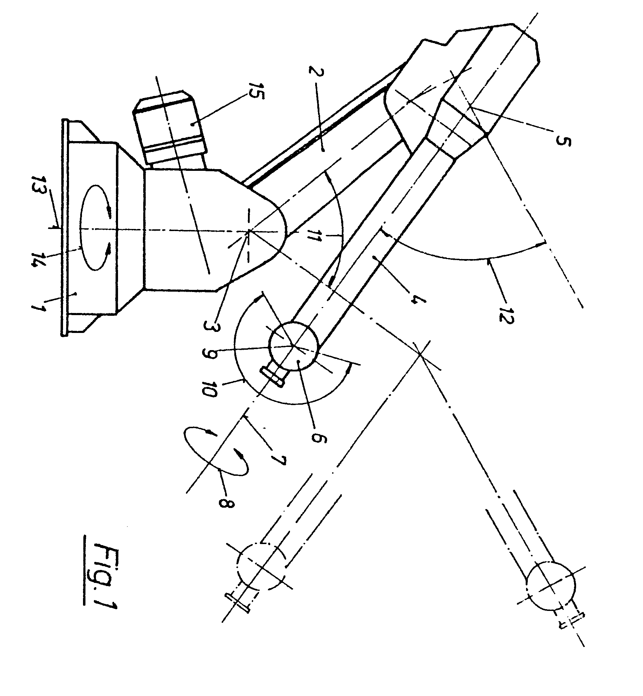

Zunächst sei der grundsätzliche Aufbau des neuartigen Manipulators anhand von Fig. 1 erläutert. Dieser besteht aus einem Grundgestell 1, an dem ein erster Arm 2 um eine horizontale Achse 3 schwenkbar ist. An den ersten Arm 2 ist ein zweiter Arm 4 angelenkt, und zwar ebenfalls mit einer horizontalen Achse 5. Am Ende des zweiten Armes 4 sitzt ein Gelenk 6, das um eine Achse 7 in Richtung des Pfeiles 8 drehbar ist. Außerdem kann das Gelenk um eine weitere horizontale Achse 9 in Richtung des Pfeiles 10 verschwenkt werden. Am Gelenk 6 ist ein Greifer angebracht oder ein anderes Werkzeug.

Die Verschwenkung des Armes 2 um die Achse 3 ist durch den Pfeil 11 angedeutet und die Verschwenkung des Armes 4 um die Achse 5 durch den Pfeil 12. In Fig. 1 sind außerdem strichpunktiert verschiedene Lagen des Endes des Armes 4 mit dem Gelenk 6 angedeutet.

Das Grundgestellt ist um eine lotrechte Achse 13 schwenkbar, wie durch den Pfeil 14 angedeutet. Hierzu ist das Grundgestell 1 auf einen nicht gezeichneten Sockel aufgesetzt. Position 15 deutet eine den Antrieb für den Arm 2 an. Dieser Manipulator kann somit in fünf Achsen betätigt werden, die durch die Pfeile 14, 11, 12, 10 und 8 symbolisiert werden.

Zum Programmieren des Manipulators wird der Greifer bzw. ein am Greifer befestigtes Werkzeug in der jeweils gewünschten Bahn geführt. Diese kann wegen des vorstehend beschriebenen Aufbaues des Manipulators sehr frei durchgeführt werden. Ist der Manipulator programmiert, so führt er selbsttätig und beliebig oft den ihm einprogrammierten Bewegungsablauf aus. Hierzu ist für den Antrieb in jeder Achse ein eigener Antriebsmotor vorgesehen.

- 7 -

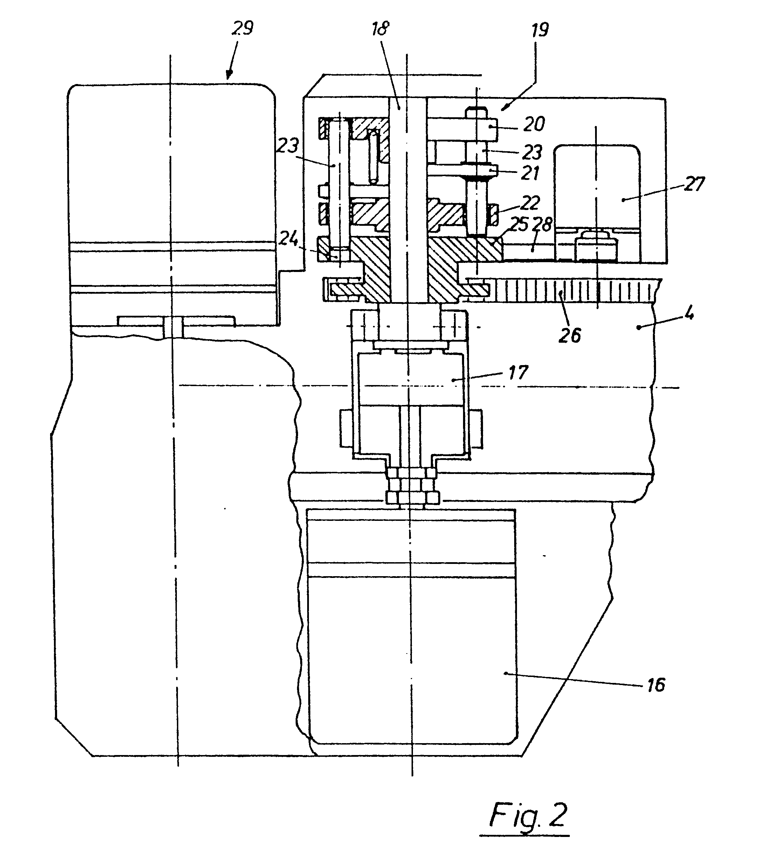

Damit das Programmieren der lernfähigen Steuerung des Manipulators nahezu schwerelos erfolgt, werden vorher alle Antriebe mit zugehörigen Getriebeteilen des Manipulators ausgekuppelt. Dies wird im folgenden anhand von Fig. 2 am Beispiel des Armes 4 erläutert.

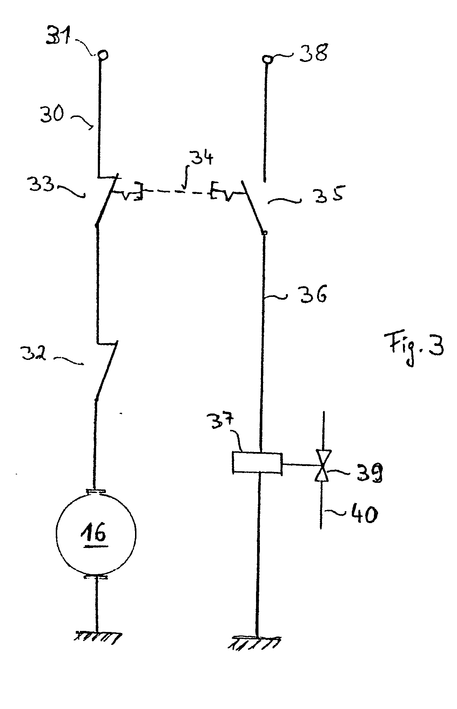

Ein Antriebsmotor 16 ist ausgangsseitig mit einem Getriebe 17 verbunden. Ausgangsseitig des Getriebes ist eine Achse 18 vorgesehen, die eine Kupplung 19 antreibt. Die Kupplung besteht aus Kupplungsscheiben 20, 21 und 22. Die Kupplungsscheiben haben Durchgangslöcher für Kupplungsstifte 23. Die Kupplungsstifte sind mit der mittleren Kupplungsscheibe 21 fest verbunden. Diese kann in Richtung der Achse 18 von einem Kupplungsantrieb (vgl. Fig. 3) verschoben werden. Werden die Stifte in Richtung auf das Getriebe 17 verschoben (nach unten in Fig. 2), so rasten die Stifte in Löcher 24 eines Kettenrades 25 ein und stellen dadurch eine kraftschlüssige und spielfreie Verbindung zwischen dem Motor 16 und dem Kettenrad 25 her. Werden die Kupplungsstifte 23 ausgerückt, d.h. in Richtung hinweg vom Motor 16 verschoben, so ist diese kraftschlüssige Verbindung unterbrochen.

Auf dem Kettenrad 25 läuft eine Kette 26, die in eingekuppeltem Zustand die Bewegung auf die nächste Achse, beispielsweise auf das Gelenk 6, überträgt.

Außerdem ist der Kupplung 19 benachbart am Arm 4 ein Kodiergerät 27 befestigt, das, beispielsweise über eine bei Pos. 28 angedeutete Verbindung, ständig eingeschaltet ist. Das Kodiergerät erhält somit alle Informationen über die jeweils durchgeführten Bewegungen. An jedem Gelenk bzw. an jeder Achse ist ein solches, ständig eingeschaltetes Kodiergerät vorgesehen.

- 8 -

Bevorzugt ist die Kupplung 19 als Reibungskupplung ausgebildet, damit in jeder Winkellage eine kraftschlüssige Verbindung erfolgen kann.

Bei Position 29 ist ein weiterer Antriebssatz für einen anderen Arm mit Kupplung entsprechend den Bauteilen rechts in Fig. 2 angedeutet.

Alle Kupplungen 19 des Manipulators werden gleichzeitig über ein fernbedientes oder auch über ein handbetätigtes Antriebselement eingeschaltet bzw. ausgeschaltet. In getrenntem Zustand der Kupplungen kann die Programmierung nahezu reibungsfrei erfolgen, weil die Kupplungen direkt hinter dem Antrieb mit seinem Getriebe 17 angeordnet sind, so daß alle im Kraftfluß hinter den Kupplungen liegenden Bauteile nicht mitbwegt zu werden brauchen.

Das Programmieren wird nahezu schwerelos, weil geeignete mechanische, hydraulische oder pneumatische Federelemente oder auch Gegengewichte vorgesehen sind.

Bei der somit nahezu schwerelos und nahezu reibungsfrei erfolgenden Führung des Greifers zur Programmierung wird die Bewegung jedes Armes über sein Kodiergerät und eine nicht dargestellte elektronische Steuerung ständig aufgezeichnet. Das Einkuppeln und Auskuppeln ist in einer beliebigen Position möglich, und zwar gleichzeitig für alle Achsen. Durch den entsprechenden Gewichtsausgleich können die Ruhepositionen aller Achsen bestimmt werden. Es sind dann zum Programmieren lediglich noch die Auslenkungskräfte bei der Handführung notwendig.

- 9 -

Bei dieser Handführung zwecks Programmierung ergeben sich Programmierzeiten, die im wesentlichen der Arbeitszeit bei manueller Bedienung entsprechen. Sogar Kleinstserien und Einzelbearbeitungen, z. B. beim Lichtbogenschweißen, beim Reinigen von Eisenguß und anderen Teilen, können erst dadurch wirtschaftlich maschinell bearbeitet werden. Dadurch eröffnen sich somit neue Einsatzmöglichkeiten für den neuartigen Manipulator, insbesondere wenn mittlere oder kleinere Serien von Werkstücken rationell bearbeitet werden sollen. Eine Handführung der Achse ist auch bei ungünstigen Hebelverhältnissen und Platzverhältnissen gegeben.

Im Folgenden soll die Sicherheitsschaltung nach Fig. 3 beschrieben werden. Alle Antriebe 16 - in Figur 3 ist symbolisch nur einer dieser Antriebe gezeigt - werden über eine Leitung 30 gemeinsam von einer Spannungsquelle 31 mit Leistung versorgt. In der Leitung 30 befindet sich ein Sicherheitskontakt 32. Außerdem kann ein weiterer Sicherheitskontakt 33 in Serie mit dem ersten Sicherheitskontakt 32 in der Leitung 30 vorgesehen sein.

Der erste Sicherheitskontakt 32 ist beispielsweise an einer Tür eines den Arbeitsbereich des Manipulators umgebenden Absperrgitters angebracht. Will nun eine Bedienungsperson den Manipulator programmieren, so öffnet sie die Tür und der Sicherheitskontakt 32 wird dadurch geöffnet. Dadurch werden alle Antriebe 16 gleichzeitig von ihrer Spannungsquelle abgetrennt. Der Sicherheitskontakt 32 ist so ausgebildet, daß er erst dann schließt, wenn die Bedienungsperson einen besonderen Handgriff getan hat, beispielsweise wenn von Hand ein Sicherheitsschalter betätigt wurde. Der Sicherheitskontakt 32 schließt also nicht, wenn die Tür hinter der Bedienungsperson wieder geschlossen wird.

- 10 -

Am vorderen Ende des vorderen Armes 4 sitzt ein Handgriff zum Führen der Arme des Manipulators. An diesem Handgriff ist ein Taster 34 angebracht. Bei Betätigung des Tasters wird der zweite Sicherheitskontakt 33, sofern dieser vorhanden ist, der normalerweise mit einer Feder geschlossen ist, geöffnet, wodurch eine weitere Sicherheit auf der elektrischen Seite der Sicherheitsschaltung gegeben ist. Der Taster 34 betätigt gleichzeitig einen Schalter 35, der von einer Feder normalerweise geschlossen ist. Der Schalter 35 liegt in einer Steuerleitung 36, die ein Magnetventil 37 mit einer Steuerspannungsquelle 38 verbindet. Wird der Schalter 35 bei Betätigung des Tasters 34 geöffnet, so fällt das Magnetventil 37 ab, wodurch über eine geeignete Steuerung mit Antrieb alle Kupplungen 19 gleichzeitig und gemeinsam ausrücken, d.h. geöffnet werden. Es werden somit bei Betätigung des Tasters 34 nicht nur alle Antriebe 16 von ihrer Spannungsquelle (Leistungs-Spannungsquelle) abgetrennt, sondern gleichzeitig alle Kupplungen 19 getrennt, wodurch eine mechanische und elektrische Sicherheitsschaltung ausgebildet wird. Das Ausrücken aller Kupplungen 19 erfolgt beispielsweise dadurch, daß beim Abfallen des Magnetventils 37 ein Ventil 39 geöffnet wird, das in einer Druckluftleitung 40 alle Kupplungen 19 gemeinsam mit Druckluft versorgt. Herrscht in der Druckluftleitung 40 Überdruck, so sind alle Kupplungen 19 eingefallen. Herrscht in der Druckluftleitung 40 Normaldruck, so sind alle Kupplungen 19 über Federn ausgerückt.

Die neuartige Sicherheitsschaltung stellt somit sicher, daß beim Programmieren des Manipulators von Hand die Antriebe 16 mit einer doppelten Sicherheit geschützt sind. Würde nur einer dieser Antriebe unbeabsichtigt seinen Arm drehen können, so könnte eine im Schwenk-

- 11 -

bereich dieses Armes stehende Bedienungsperson praktisch nicht mehr ausweichen, weil solche Arme mit einer Winkelgeschwindigkeit von etwa $300^{\circ}$ pro Sekunde verschwenkt werden.

Am Ende des Programmiervorganges geht der Taster 34 durch eine Feder wieder in seine Ruhelage und die Schalter 33 und 35 werden wieder geschlossen.

- 1 -

Patentansprüche

1. Programmgesteuerter, mehrachsiger Manipulator mit mehreren, unabhängig voneinander verschwenkbaren Armen (2, 4, 6) mit eigenen Antrieben (16), wobei wenigstens einer der Arme um eine horizontale Achse schwenkbar ist und die Antriebe (16) zwecks Erleichterung der Führung der Arme beim Programmieren des Manipulators ausschaltbar sind, ferner mit Gewichtsausgleich aller um horizontale Achsen schwenkbaren Arme,
   dadurch gekennzeichnet,
   daß im Kraftfluß zwischen jedem Antrieb (16) und dem ihm zugeordneten Arm (2, 4, 6) jeweils eine Kupplung (19) vorgesehen ist, die bei ihrer Betätigung über einen eigenen Kupplungsantrieb den Arm (2, 4, 6) von seinem Antrieb (16) ganz trennt, daß ein Wegemeßsystem (26, 27) an jedem Arm (2, 4, 6) im Kraftfluß hinter der diesem Arm (4) zugeordneten Kupplung (19) befestigt ist, und daß eine Sicherheitsschaltung vorgesehen ist, die im Bereich des Manipulators einen Sicherheitskontakt hat, der alle Antriebe (16) von ihrer Energieversorgung trennt, wenn eine Bedienungsperson zum Programmieren in den Schwenkbereich der Arme (2, 4, 6) des Manipulators tritt, und die einen Taster hat, bei dessen Betätigung alle Kupplungen (19) gemeinsam getrennt werden.

2. Manipulator nach Anspruch 1,
   dadurch gekennzeichnet,
   daß der Sicherheitsschalter an einer Tür eines den Arbeitsbereich des Manipulators umgebenden Absperrgitters angebracht ist und der Taster an einem Handgriff, mit dem der letzte der Arme (4) des Manipulators geführt wird.

- 2 -

3. Manipulator nach Anspruch 1 oder Anspruch 2,
   d a d u r c h   g e k e n n z e i c h n e t ,
   daß der Taster bei seiner Betätigung einen weiteren
   Sicherheitskontakt in der Energieversorgung aller
   Antriebe (16) öffnet.

4. Manipulator nach einem der Ansprüche 1 bis 3,
   d a d u r c h   g e k e n n z e i c h n e t ,
   daß die Kupplungen (19) als Reibungskupplungen
   ausgebildet sind.

5. Manipulator nach einem der Ansprüche 1 bis 4,
   d a d u r c h   g e k e n n z e i c h n e t ,
   daß für den Gewichtsausgleich vorgesehene Gegengewichte oder Federelemente an wenigstens einer der
   Achsen (4) einstellbar sind.

6. Manipulator nach einem der Ansprüche 1 bis 5,
   d a d u r c h   g e k e n n z e i c h n e t ,
   daß bei einem dem Antrieb (16) nachgeschalteten
   Getriebe (17) dieses in Kraftfluß vor der ihm
   zugeordneten Kupplung (19) angeordnet ist.

Fig.1

**0077906**

*Fig. 2*

Walter *Reis*

Fig. 3